Europäisches Patentamt

European Patent Office

Office européen des brevets

(19)

(11) Publication number: **0 130 573**
**A2**

# EUROPEAN PATENT APPLICATION

(21) Application number: **84107473.5**

(22) Date of filing: **28.06.84**

(51) Int. Cl.⁴: **G 11 B 15/467**

(30) Priority: **04.07.83 JP 120393/83**

(43) Date of publication of application: **09.01.85**
**Bulletin 85/2**

(84) Designated Contracting States: **DE FR GB IT**

Applicant: **HITACHI MICROCOMPUTER ENGINEERING LTD., 1479, Josuihon-cho, Kodaira-shi Tokyo (JP)**

(72) Inventor: **Okamoto, Kaneyuki, Hitachi-Tabikoryo, 391-2, Tabiko Katsuta-shi (JP)**
Inventor: **Kobori, Yasunori, 212, Yoshida-Apartment House, 594, Yoshidacho Totsuka-ku Yokohama (JP)**
Inventor: **Nishijima, Hideo, Hitachi-Tabikoryo, 391-2, Tabiko Katsuta-shi (JP)**
Inventor: **Takahashi, Takashi, Hitachi-Takabaryo, 1621-8, Takaba Katsuta-shi (JP)**
Inventor: **Fukushima, Isao, 828-17, Ichige, Katsuta-shi (JP)**
Inventor: **Kano, Kenji, 1322-39, Miwa-3-chome, Mito-shi (JP)**
Inventor: **Ichimura, Shinya, 13-1, Yorii-Apartment House, 391-2, Tabiko Katsuta-shi (JP)**

(74) Representative: **Altenburg, Udo, Dipl.-Phys. et al, Patent- und Rechtsanwälte Bardehle-Pagenberg-Dost-Altenburg & Partner Postfach 86 06 20, D-8000 München 86 (DE)**

(71) Applicant: **HITACHI, LTD., 6, Kanda Surugadai 4-chome Chiyoda-ku, Tokyo 100 (JP)**

(54) **Servo system for magnetic recording/reproduction apparatus.**

(57) In a helical scan-type video tape recorder, a tach signal is generated as a reference signal when the rotating heads (2, 3) trace the vertical blanking period recorded portion of the tracks on a magnetic tape (1) moving at the standard speed, and this reference signal and a signal indicative of the level-reduced portion (N) of the reproduced video signal (V) from the rotating heads are compared in phase with each other to produce a phase difference signal (T), by which the transportation of the magnetic tape is controlled so that the level-reduced portion coincides with the vertical blanking period of the reproduced video signal.

Hitachi, Ltd.
Hitachi Microcomputer
Engineering Ltd.

- 1 -

0130573
June 28, 1984
A 5588-EP

## SERVO SYSTEM FOR MAGNETIC

## RECORDING/REPRODUCTION APPARATUS

This invention relates to a servo system suitable for use in magnetic recording/reproduction apparatus having the function of fast feeding reproduction or reverse feeding reproduction.

The magnetic recording/reproduction apparatus widely used recently is of the helical scan type in which slant tracks are formed on the magnetic tape and successively reproduced by a plurality of rotating heads. A video signal of a unit period, in general, one field is recorded on each track. The switching of the rotating heads is simplified and can be made at the time of the vertical blanking period of the reproduced video signal so that no undesired noise, upon this switching, appears on the picture screen.

Thus, since the switching operation between the rotating heads is arranged to be carried out in the vertical blanking period in the reproduced video signal, the vertical blanking period of video signal is recorded at both ends of each track (the portion in which the vertical blanking period is recorded is hereinafter referred to as the vertical blanking period recorded portion). Upon properly trace the tracks (namely, tracking is carried out) and are switched at the vertical blanking period recorded portion.

The tracking of the rotating heads upon reproduction can be realized by controlling the transport of the magnetic tape and the rotation phase of the rotating heads.

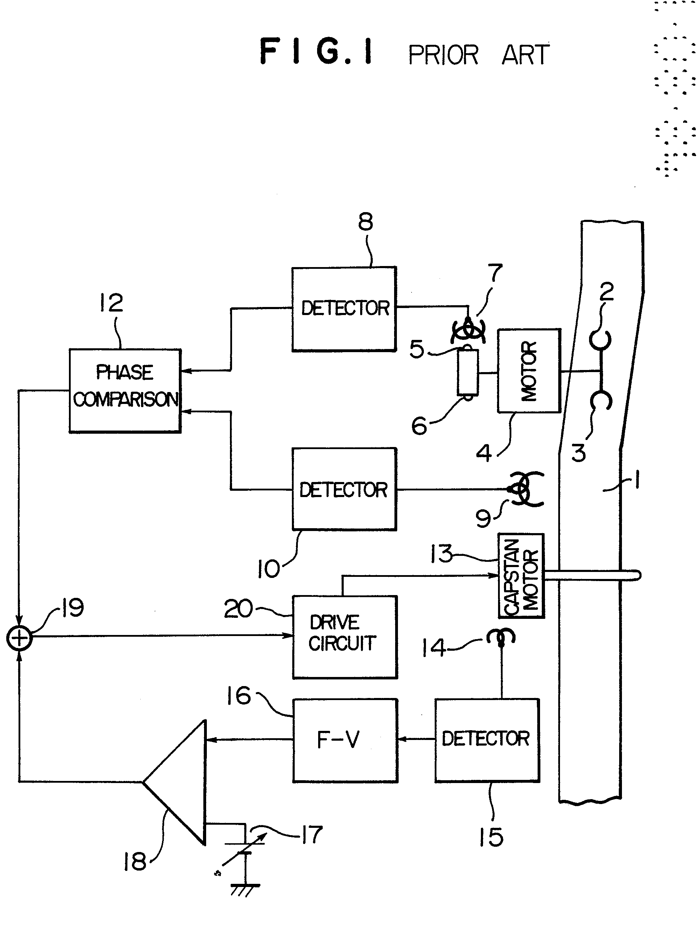

Figure 1 is a block diagram of one example of the servo system for controlling the tape transport and the rotation phase of heads.

Referring to Figure 1, the rotation of a capstan motor 13 is detected by a coil 14, the output signal from which is supplied to a detector 15, which then produces a frequency signal indicative of the rotation speed of the capstan motor 13. This frequency signal is supplied to and converted by a frequency-to-voltage converter 16 into a voltage, which is compared with a reference voltage from a variable voltage source 17 in an error amplifier 18. An error voltage from the error amplifier 18 is added in an adder 19 with an error voltage from the phase comparator which will be described later. The voltage from the adder 19 is supplied to a drive circuit 20.

The capstan motor 13 is controlled in its rotation by the drive circuit 20 to move the magnetic tape 1 in a predetermined direction. Therefore, the magnetic tape 1 is controlled in its speed so that the voltage from the frequency-voltage converter 16 coincides with the reference voltage of the variable voltage source 17.

On the other hand, when a drum motor 4 rotates, magnetis 5, 6 coupled thereto are also rotated and thus a tach (tachometer) head 7 opposed thereto produces a tach(tachometer) pulse. The tach pulse is detected by a detector 8, which then produces a rotation phase signal indicative of the rotation phase of the rotation heads 2, 3 and supplies it to a phase comparator 12. A control signal recorded on the magnetic tape 1 is reproduced by a control head 9, and supplied through a detector 10 to the phase comparator 12. The error voltage from the phase comparator 12 is applied to the adder 19, and controlling the capstan 13 to rotate as described above.

The magnets 5, 6 and tach head 7 are so positioned as to generate a tach pulse when the rotating heads 2 or 3 is tracing the vertical blanking period recorded portion on a track. The detectors 8 and 10 are set such that when the output pulses therefrom have a predetermined phase difference each other, the rotation heads 2, 3 coincidentaly trace the vertical blanking period recorded portion.

Therefore, in this servo system, the error voltage from the error amplifier 18 controls the speed of the capstan motor 13 and the error voltage from the phase comparator 12 similarly controls the phase.

However, in the magnetic recording/reproduction apparatus having such servo system, when the magnetic tape transportation speed is increased to twice or three times the standard speed, for fast-feeding reproduction mode, or when reproduction is made at the standard speed in the reverse direction, offensive noise bars appear on the reproduced picture inevitably due to the phase control function of the servo system.

In other words, in the system of Figure 1, whenever the magnetic tape 1 is in any mode such that the standard speed reproduction mode, twice normal or three times normal speed reproduction mode (hereinafter, forward twice or three-times speed mode) or reverse standard speed mode, the servo system controls the phase such that the rotating heads 2, 3 properly trace the ends of tracks on the magnetic tape 1, which is the vertical blanking period recorded portion. On the other hand, in a case that the magnetic tape 1 is transported at forward twice speed, forward three-times speed or reverse standard speed, since the rotating head 2 or 3 trace the vertical blanking period recorded portion on the ends of track trace of the magnetic head deviates more and more from a track at portions other than the ends of the track, because the slants of the tracks and the traces of the rotating heads 2, 3 have of course different angles relative to the magnetic tape 1 at such modes.

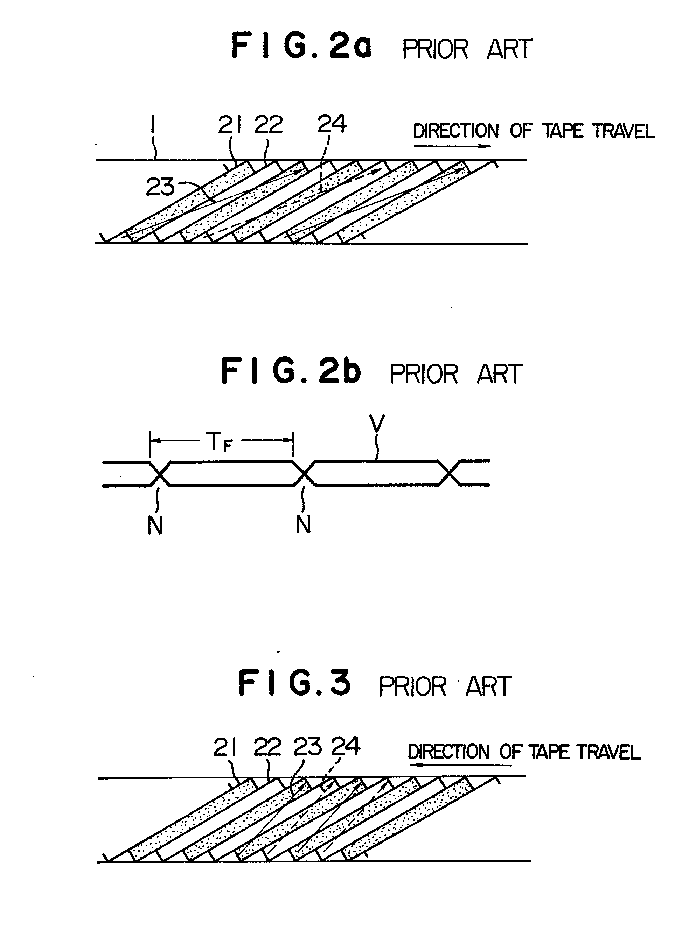

Figure 2a shows the relation between tracks 21, 22 and traces 23, 24 of rotating head at reverse standard speed.

In this case, the magnetic recording/reproduction apparatus is of agimuth recording system, and thus the tracks 21 and 22 have different magnetization directions and are alternately formed in the longitudinal direction of the magnetic tape 1. It is assumed that the trace 23 (solid line) is of the rotating head (Figure 1) having the agimuth angle associated with the track 21, and that the trace 24 (broken line) is of the rotating head 3 (Figure 1) having the azimuth angle associated with the track 22.

As shown in Figure 2a, the rotating head 2 traces the end (vertical blanking period recorded portion) of the track 21 at first, but after that its trace 23 is deviated more and more from the track 21 according to tracing. Then, it again trace the end of the next track having the same magnetization direction as the track 21. The rotating head 3 also traces the end of the track 22 but its trace 24 is deviated more and more from the track 22 according to the tracing. Then, after crossing the adjacent track having different magnetization direction, the magnetic head 3 traces the end of the next track having the same magnetization direction. Accordingly, the rotating heads 2, 3 cross the tracks having the magnetization direction not associated with their azimuth angle, respectively, and at this time, the reproduced video signal is reduced in level. This level reduction occurs once each time each of the rotating heads 2, 3 traces one track. In other words, as shown in Figure 2b, the reproduced video signal V from the rotating heads 2, 3 has the level-reduced portion N at each field period $T_F$. Since this level-reduced portion N occurs at the centre of each field of video signal, noise is usually produced in this level-reduced portion N when the frequency-modulated video signal picked up from the magnetic tape is demodulated. This noise appears as noise bar at the centre of the reproduced picture.

Similarly at forward three-times normal (standard) speed, each of the rotating heads 2, 3 crosses the adjacent track having the magnetization direction not associated with azimuth angle of the head at the center of each scanning traces 23, 24 as shown in Figure 3, thus noise bar appearing at the centre of the reproduced picture.

Thus, the above-mentioned servo system has a drawback that upon special reproduction such as high speed reproduction or reverse reproduction, noise bar inevitably occurs at the centre of the picture screen.

Accordingly, it is an object of this invention to provide a servo system for magnetic recording/reproduction apparatus in which the drawback of the prior art is obviated by shifting the noise bar due to the level reduction of the reproduced video signal to the vertical blanking period in the case of the high speed reproduction or reverse reproduction, thereby good reproduced picture being obtained.

In order to achieve the object of this invention, this invention employs a tach signal which is generated when the rotating heads trace the vertical blanking period recorded portion of tracks while the magnetic tape is being transported at the standard speed. This tach signal is used as a reference signal with which the signal indicative of the level reduced portion of the reproduced video signal from the rotating heads is compared in phase to produce a phase error signal. This phase error signal is used to control the transport of the magnetic tape so that the level-reduced portion coincides with the vertical blanking period of the reproduced video signal.

According to this invention, there is provided a servo system for magnetic recording/reproduction apparatus in which upon high speed reproduction or reverse reproduction, the level-reduced portion of reproduced video signal inevitably caused can be shifted to the vertical blanking period, thus the noise bar caused by the level reduced portion can be prevented from appearing on the reproduced picture without tracking adjustment for the rotating heads correctly tracing the tracks, and also the number of noise bars can be decreased, whereby good reproduced picture is obtained upon such special reproduction, and this excellent function can be achieved with the drawback of the prior art being obviated.

The present invention will be apparent from the following detailed description taken in conjunction with the accompanying drawings, in which:

Figure 1 is a block diagram of one example of the conventional servo system for magnetic recording/reproduction apparatus;

Figure 2a shows the relation between the track and the scanning trace of rotating heads controlled by the servo system of Figure 1 in the reverse normal speed mode;

Figure 2b shows the reproduced video signal in the reverse normal speed mode;

Figure 3 shows the relation between the tracks and the scanning traces of rotating heads controlled by the servo system of Figure 1 in the forward three-times normal speed mode;

Figure 4 is a block diagram of one embodiment of the servo system for magnetic recording/reproduction apparatus according to this invention;

Figure 5 is a waveform diagram of signals at each portion of the servo system of Figure 4;

Figure 6 is a block diagram of a specific example of the phase comparator in Figure 4;

Figure 7 is a waveform diagram of signals at each portion of the phase comparator of Figure 6; and

Figure 8 is a block diagram of another embodiment of the servo system for magnetic recording/reproduction apparatus according to this invention.

Embodiments of this invention will hereinafter be described with reference to the accompanying drawings.

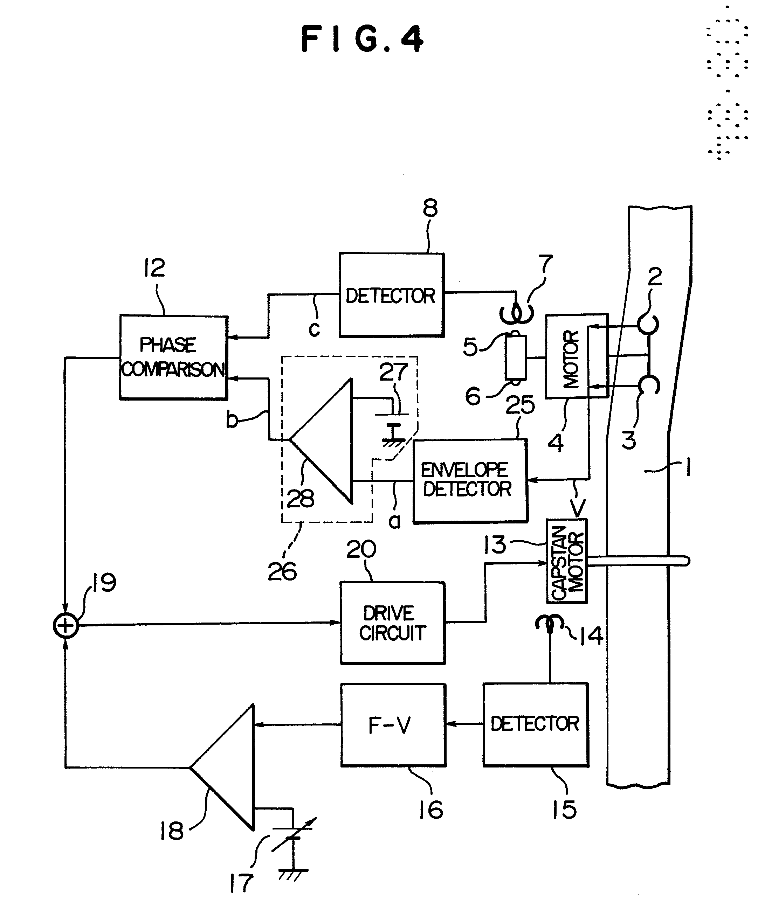

Figure 4 is a block diagram of one embodiment of a servo system for magnetic recording/reproduction apparatus according to this invention. Referring to Figure 4, there are shown the magnetic tape 1, the capstan motor 13 for transporting the tape 1 in a certain direction, the coil 14 for detecting the rotation of the capstan motor 13, the rotation speed detector 15 responsive to a signal induced in the coil 14 to produce a frequency signal indicative of the rotation speed of the capstan motor 13, the frequency-to-voltage converter 16 for converting the frequency signal from the detector 15 to a voltage signal, and the error amplifier 18 which is supplied at one input end with the output voltage from the converter 16 and at its other input end with a reference voltage from the variable voltage source 17. The amplifier 18 compares both input voltages to produce an error voltage. The adder 19 then adds the error voltage to another error voltage produced from the phase comparator 12 which will be described later. The output from the adder 19 is supplied to the drive circuit 20.

The capstan motor 13 is controlled to rotate by the drive circuit 20 and thereby to move the magnetic tape 1 in a predetermined direction. Therefore, the magnetic tape 1 is controlled in its speed so that the voltage from the frequency-to-voltage converter 16 coincides with the reference voltage from the variable voltage source 17.

The rotating heads represented by numerals 2 and 3 are alternately switched by a head switching device (not shown) to record each field of an FM video signal slantly on the magnetic tape 1. Shown at 4 is the drum motor for rotating the heads 2 and 3, and at 5 and 6 are magnets which are mounted on the rotor of the drum motor 4. The tach head 7 is provided to oppose the magnets 5 and 6 and to generate tach pulses as the drum motor 4 rotates.

The positional relation between the tach head 7 and magnets 5 and 6 is established so that a tach pulse is generated when the head 2, 3 scans and reproduces the vertical blanking period record portion of a track.

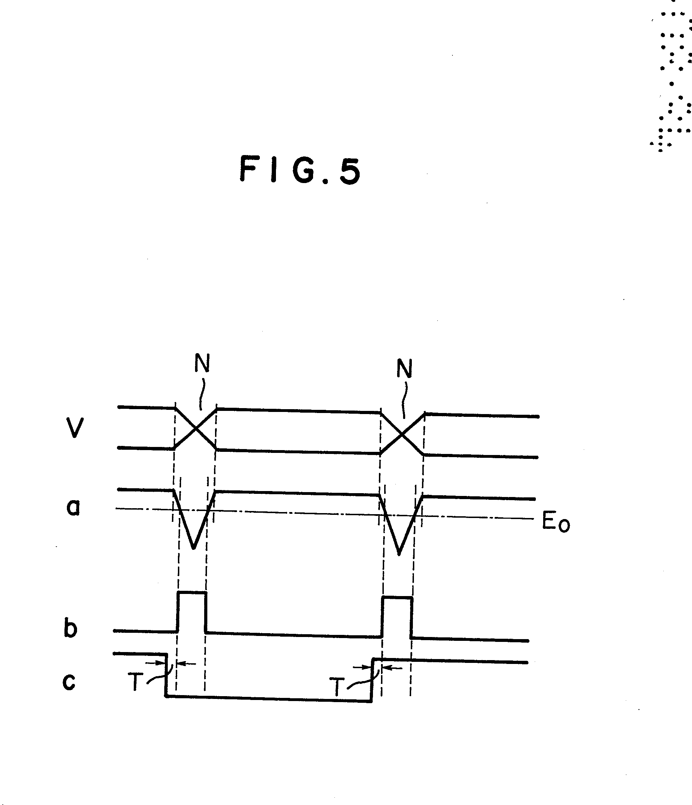

The circuit 8 is provided to receive the tach pulses from the tach head 7 and produce a rotation phase signal C (Fig. 5C) indicative of the rotation phase of the rotating head 2, 3.  An envelope detector 25 is provided to receive an FM video signal V reproduced by the rotating heads 2 and 3 and produce a signal $a$ indicative of the envelope.  A level detector 26 comprises a constant voltage source 27 for a constant reference voltage $E_0$ and a comparator 28, and compares the envelope signal $a$ with the reference voltage $E_0$ to produce a signal $b$ (Fig. 5b) indicative of the portion of envelope signal $a$ lower than the level $E_0$.  Therefore, the output signal $b$ shows the level-reduced portion N (Fig. 2b) of the FM video signal V (Fig. 5V) which is provided when the rotating head 2, 3 crosses a track of different magnetized direction.  The rotation phase signal $c$ from the circuit 8 and the output signal $b$ from the level detector 26 are applied to the phase comparator 12, the difference output from which controls the rotation phase of the capstan motor 13.

Figure 5 is a waveform diagram showing signals at respective portions in Figure 4.  Like signals corresponding to those in Figure 4 are designated by the same reference numerals.

The operation of the arrangement of Figure 4 in the reproducing mode will be described below.

Referring to Figures 4 and 5, the rotation phase signal $c$ from the circuit 8 alternately rises up and falls off immediately before each vertical blanking period of reproduced video signal when the magnetic tape 1 is travelling at the standard speed in the standard reproducing mode.  This rotation phase signal is applied to the phase comparator 12.

When the magnetic recording/reproduction apparatus is changed from this state to a special reproducing mode by driving the magnetic tape 1 at a high speed or in the reverse direction, the reproduced video signal V from the rotating head 2, 3 is supplied to the envelope detector 25, which then produces the envelope signal $a$. This envelope signal $a$ is supplied to the level detector 26, which then produces the output signal $b$ indicative of a level lower than the reference voltage $E_0$ from the constant voltage source 27.

The output signal $b$ is applied to the phase comparator 12. Consequently, the phase comparator 12 produces a control voltage corresponding to the phase difference T between the rising (leading edge) of the output signal $b$ and the leading edge or triling edge of the rotating phase signal $c$. This control voltage is supplied through the adder 19 to the drive circuit 20, which controls the rotation phase of the capstan motor 13.

The capstan motor controls the magnetic tape 1 to move so that the phase difference T between the rotation phase signal $c$ and the output signal $b$ from the level detector 26 becomes a predetermined value in the phase comparator 12. The phase comparator 12 is arranged so that when the phase difference T is a predetermined value, the level-reduced portion N of the reproduced video signal V is within the vertical blanking period of the reproduced video signal V.

- 12 -

0130573

Therefore, the noise bar due to the level-reduced portion N is shifted within the vertical blanking period, thus disappearing from the reproduced-picture screen.

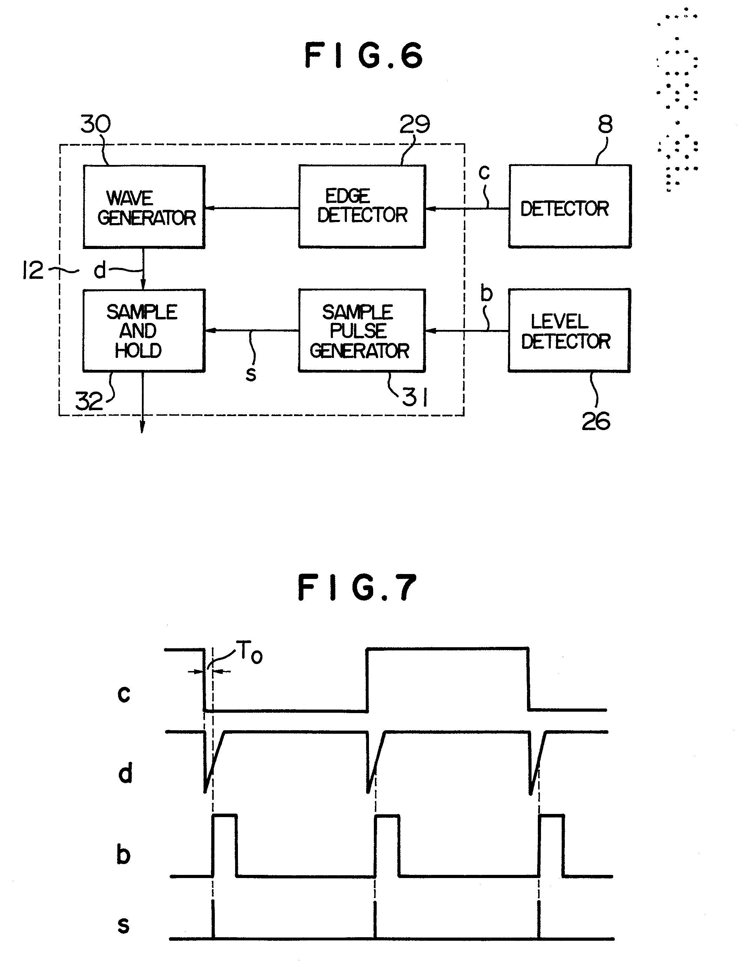

Fig. 6 is a block diagram of a specific example of the phase comparator 12 of Figure 4. Numeral 29 represents an edge detector, 30 a trapezoidal wave generator, 31 a sampling pulse generator, and 32 a sample-and-hold circuit. Like portions corresponding to those of Figure 4 are identified by the same reference numerals.

Figure 7 is a waveform diagram showing signal waveforms at respective portions in Figure 6. Like portions corresponding to those of Figure 6 are identified by the same reference numerals.

Referring to Figures 6 and 7, the rotation phase signal $c$ from the circuit 8 is applied to an edge detector 29 of the phase comparator 12, which then detects the edge signal from the leading and trailing edges of the rotation phase signal $c$. This edge signal is supplied to a trapezoidal generator 30, which then produces a trapezoidal signal $d$ sharply falling off at the edge signal and rising with a certain slope. The output signal $b$ indicative of the level-reduced portion of the reproduced video signal V from the level detector 26 is supplied to a sampling pulse generator 31, which then produces a sampling pulse $s$ at the leading edge of the output signal $b$.

The trapezoidal wave signal $d$ and sampling pulse $s$ are applied to the sample-and-hold circuit 32, which then produces a control voltage corresponding to the level

0130573

of the trapezoidal signal $\underline{d}$ at the sampling pulse $\underline{s}$. The control voltage is supplied to the adder 19 (Fig. 4).

When the phase difference between the rotation phase signal $\underline{c}$ and the output signal $\underline{b}$ from the level detector 26 is a predetermined value $T_0$, the level-reduced portion N of the reproduced video signal V is produced within the vertical blanking period of the reproduced video signal V, and the control voltage from the sample-and-hold circuit 32 is zero at this time. When the phase difference between the rotation phase signal $\underline{c}$ and the output signal $\underline{b}$ is different from the predetermined value, the control voltage becomes positive or negative depending on the direction of the deviation.

It is assumed that the control voltage is zero when the phase difference between the rotation phase signal $\underline{c}$ and output signal $\underline{b}$ is a predetermined value $T_0$ at which time the sampling pulse $\underline{s}$ is at the centre of the rising slope of the trapezoidal wave signal $\underline{d}$. When the phase difference is larger than $T_0$, the control voltage becomes positive, controlling the magnetic tape 1 (Fig. 4) to be slow in its movement, while when it is smaller than $T_0$, the control voltage becomes negative, controlling the tape 1 to be fast in its movement.

If the magnetic recording/reproduction apparatus is changed from the standard mode to the positive three-times speed mode, at this instant the rotating head 2, 3 traces tracks as shown in Fig. 2a. The level-reduced portion N is produced at the centre of one field, and

0130573

thus the sampling pulse $s$ is greatly deviated from the leading edge of the trapezoidal signal $d$. As a result, a positive control voltage is produced from the sample-and-hold circuit 32, controlling the magnetic tape 1 to be slow in its movement. Then, the sampling pulse $s$ advances in its phase, and finally it comes to the centre of the rising slope of the trapezoidal signal $d$, where the control voltage is zero.

In this way, the noise bar is automatically pulled into the vertical blanking period. This is true for the reverse-rotation standard speed mode or forward two-times speed mode.

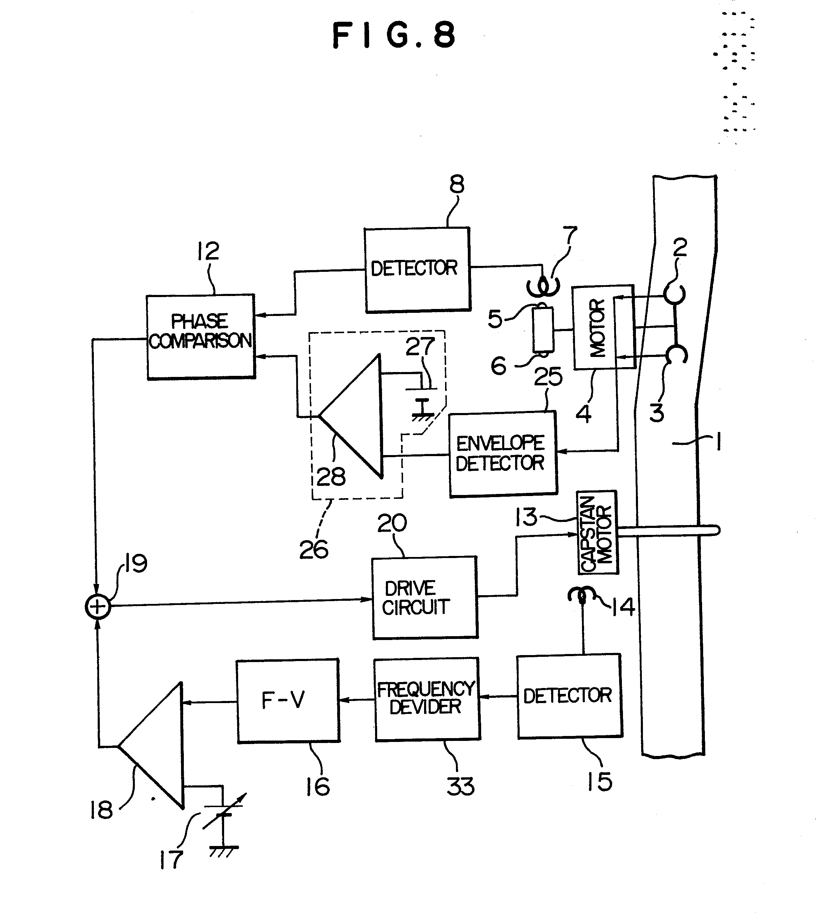

Figure 8 is a block diagram of another embodiment of the servo system for magnetic recording/reproduction apparatus according to this invention. Numeral 33 represents a frequency dividing circuit. Like elements corresponding to those of Figure 4 are identified by the same reference numerals and will not be described.

This embodiment is to reduce the number of noise bars upon high-speed search reproduction. That is, if search reproduction at M-times speed is made where M is the dividing number of the frequency dividing circuit 33 and a much large positive integer, the rotating head 2, 3 crosses many tracks of different magnetization directions, so that a large number of noise bars appear on the reproduced picture. In this case, if one of the noise bars is pulled into the vertical blanking period, the number of noise bars can be reduced.

0130573

Referring to Figure 8, the signal corresponding to the rotation speed of the capstan 13 is detected by the coil 14, and supplied to the detector 15, which then produces a frequency signal indicative of the revolution rate of the capstan 13. This frequency signal has a frequency much higher than in the standard mode, and hence it is supplied to the frequency dividing circuit 33 where the frequency is divided by M. The frequency-divided signal is converted to a voltage by the frequency-to-voltage converter 16. This voltage is applied to the error amplifier 18 where it is compared with the reference voltage from the variable voltage source 17. The error voltage from the amplifier 18 is used to control the rotation speed of the capstan motor 13. In this way, the magnetic tape 1 is transported at a constant speed.

On the other hand, the level detector 26 generates a signal indicative of a plurality of level reduced portions per field period and supplies it to the phase comparator 12 where it is compared with the rotation phase signal from the detector 8. In the phase comparator 12, one pulse of the output signal from the level detector 26 is compared with the rotation phase signal at every fields. The error voltage from the comparator 12 is supplied through the adder 19 to the drive circuit 20, thus the magnetic tape 1 being controlled in the travelling state. Therefore, one of a plurality of noise bars is pulled into the vertical blanking period, thus the number of noise bars appearing on the reproduced picture being reduced.

- 16 -

0130573

According to this embodiment, one pulse of the output signal from the level detector 26 is compared in phase with the rotation phase signal at every fields because the phase comparison between all pulses of the output signal and the rotation phase signal will cause error in the error voltage. The other pulses of the output signal in one field are rejected. This can be done by a gate circuit which opens to passes one pulse of the output pulse from the level detector 26 but closes not to pass during a period slightly shorter than one field.

While in this embodiment there are described the positional relation between the rotation phase signal and the output signal from the level detector 26 when the noise bars mentioned above are within the vertical blanking period and the change of movement of the magnetic tape 1 due to the error voltage from the phase comparator 12, this invention is not limited to this example.

When the level reduced portion where noise bar occurs is shifted to the vertical blanking period of the reproduced video signal, it is impossible to separate the vertical synchronizing signal from the reproduced video signal, but a substitutive vertical synchronizing signal can be obtained from the tach signal from the tach head 7 and hence there is no particular problem with the vertical synchronizing signal.

Also, while in this embodiment video signal of one field is recorded on each track, an integral multiple of field, for example, one frame of video signal can be

- 17 -

0130573

recorded on each track.

C L A I M S

1.    A servo system for magnetic recording/reproduction apparatus comprising:

a) a magnetic tape (1) having tracks each of where a video signal V of unit period is recorded thereon, said truck being slant across said tape;

b) motor control means (20) including a motor (13) for driving said magnetic tape to transport;

c) means (4) for driving rotating heads (2, 3) which reproduce the video signal recorded on the tracks of said tape and for generating a rotation signal corresponding to the rotation of the heads;

d) first circuit means (8) responsive to said rotation signal from said rotation driving means for producing a rotation phase signal (c);

e) second circuit means (25, 26) for detecting a level reduction of the video signal reproduced from said rotation heads, said level reduction being caused when said rotation heads trace positions deviated from said tracks of the magnetic tape, and producing a signal (b) indicative of said level-reduced portion (N) of said video signal when said level reduction is detected; and

f) third circuit means (12) responsive to said two signals (c, b) of the rotation phase signal and the signal produced by said second circuit means, for producing a control signal corresponding to the phase difference between said recieved two signals to thereby control said motor control means, said third circuit means being arranged to make said level-reduced portion (N) positioned in a vertical blanking period recorded portion of tracks of said magnetic tape.

2.      A servo system for magnetic recording/reproduction apparatus according to claim 1, wherein said second circuit means comprises an envelope detector (25) for detecting the envelope of the video signal reproduced from said rotating heads and producing an envelope signal (a), a constant voltage source (27) having a reference voltage $E_0$, and a level detector (28) responsive to said envelope signal and said reference voltage to produce a pulse signal (b) indicative of a level lower than said reference voltage when said envelope signal is lower than said reference voltage.

3.      A servo system for magnetic recording/reproduction apparatus according to claim 1, wherein said third circuit means comprises an edge detector (29) for detecting the leading and trailing edges of the rotation phase signal from said first circuit means, a trapezoidal wave generator (30) which is responsive to the edge signal from said edge detector to produce a trapezoidal wave signal (d) rapidly falling off at said edge signal and then rising with a predetermined slope, a sampling pulse generator (31) responsive to the output signal (b) from said second circuit means to produce a sampling pulse (S) at the leading edge (rising edge) of said signal and a sample-and-hold circuit (32) responsive to the trapezoidal wave signal from said trapezoidal wave generator and the sampling pulse from said sampling pulse generator to produce a motor control signal corresponding to the level of said trapezoidal wave signal sampled by said sampling pulse.

4.     A servo system for magnetic recording/reproduction apparatus according to claim 1, wherein said first circuit means comprises a circuit (8) responsive to the rotation signal (tach pulse) from said motor control means to produce a pulse-shape rotation phase signal (c) rising up and falling off just before each vertical blanking period of said reproduced video signal (V), said second circuit means comprises an envelope detector (25) responsive to the video signal reproduced by said rotation head to produce an envelope signal (a), a constant voltage source (27) having a reference voltage $E_0$, and a level detector (28) responsive to said envelope signal and said reference voltage to produce a signal (pulse b) indicative of a level lower than said reference voltage when said envelope signal is lower than said reference voltage, and said third circuit means comprises phase comparing means (12) responsive to the rotation phase signal (c) from said circuit and the output signal (b) from said level detector to produce a control signal corresponding to a phase difference (T) between the leading edge (rising edge) of said output signal and the leading and trailing edge of said rotation phase signal.

5.     A servo system for magnetic recording/reproduction apparatus according to claim 4, wherein said phase comparing means comprises an edge detector (29) for detecting the leading and trailing edges of the rotation phase signal from said first circuit means, a trapezoidal wave
generator (30) responsive to the edge signal from said edge
detector to produce a trapezoidal wave signal (d) rapidly
falling off at said edge signal and then rising up with a
certain slope, a sampling pulse generator (31) responsive
to the output signal (b) from said second circuit means to
produce a sampling pulse (S) at the leading edge (rising
edge) of said signal, and a sample-and-hold circuit (32)
responsive to the trapezoidal wave signal from said
trapezoidal wave generator and the sampling pulse from
said sampling pulse generator to produce a motor control
signal corresponding to the level of said trapezoidal
wave signal sampled by said sampling pulse.

6.       A servo system for magnetic recording/reproduction
apparatus according to claim 1, wherein said motor control
means comprises a detector (15) for detecting a signal
corresponding to the rotation signal from said motor (13)
to produce a frequency signal indicative of said rotation
speed, means (16) for converting said frequency signal to a
voltage signal, an error amplifier for comparing the output
from said converting means with the reference voltage from
the voltage source (17) to produce a difference voltage,
an adder (19) for adding the difference voltage from said
amplifier to the control signal from said third circuit
means, and a motor drive circuit (20) response to the
output voltage from said adder to drive said tape transporting motor (13) and control the tape speed so that the
output voltage from said converting means coincides with said reference voltage.

7.     A servo system for magnetic recording/reproduction apparatus according to claim 1, wherein a frequency divider (33) for dividing the frequency of said frequency signal is provided at the input side of said converting means.

8.     A servo system for magnetic recording/reproduction apparatus in which rotating heads (2, 3) trace and reproduce tracks (21, 22) each of where a video signal of unit-period is recorded thereon, said tracks being formed slantly on a magnetic tape, said servo system comprising:

first means (8) for generating a first pulse (c) where said rotating heads (2, 3) trace and reproduce vertical blanking period recorded portion of said tracks; second means (26) for detecting an amplitude reduced portion (N) of a video signal (V) reproduced by said rotating heads, said reduced portion being due to the deviation of said rotating heads from said tracks, and producing a second pulse (b) coincident with the amplitude reduced portion;

third means (12) for comparing the phases of said first and second pulses; and

fourth means (20) for controlling transportation of said magnetic tape by use of the phase difference signal from said third means whereby the deviation of said rotating heads from said tracks can be coincident with the vertical blanking period recorded portion.

# F I G. I  PRIOR ART

2/6

0130573

# FIG.2a PRIOR ART

DIRECTION OF TAPE TRAVEL

# FIG.2b PRIOR ART

# FIG.3 PRIOR ART

DIRECTION OF TAPE TRAVEL

0130573

# F I G. 4

0130573

# F I G . 5

# F I G . 6

# F I G . 7

0130573

F I G . 8